# EUROPEAN PATENT APPLICATION

(11) **EP 4 597 159 A1**
(43) Date of publication of application: **06.08.2025**
(21) Application number: 25154637.0
(22) Date of filing: 29.01.2025
(51) Int. Cl.: G01S 7/481, G01S 7/484, G01J 1/02

(54) **APERTURE FOR REDUCING CROSSTALK, OPTICAL MODULE HAVING SAME, AND ASSOCIATED METHOD**

(30) Priority: 05.02.2024 US 202418432693
(71) Applicant: STMicroelectronics International N.V., 1228 Plan-les-Ouates, Geneva (CH)
(72) Inventor: WILLIAMS, Fraser, EDINBURGH, EH11 2BY (GB); JOHNSON, Brandon Scott, EDINBURGH, EH6 5TE (GB); MAO, Yandong, SHANGHAI, 200240 (CN)
(74) Representative: Casalonga

(57) **Abstract**

In accordance with various embodiments of the present disclosure, an aperture for a transmit portion of an optical module is provided. In some embodiments, the aperture comprises a generally rectangular main body having four sides and defining a hole therethrough. Each side has at least a top surface and an inside surface. At least three of the four sides have an internal angled surface between their respective top and inside surfaces.

## Description

### FIELD OF THE INVENTION

Example embodiments of the present disclosure relate generally to optical modules and, more particularly, to apertures for optical modules.

### BACKGROUND

A time-of-flight (ToF) sensor is an optical module having a range imaging camera for measuring distances between the camera and a subject based on the round-trip time of an artificial light signal, such as may be provided by a vertical-cavity surface-emitting laser (VCSEL). ToF sensors are often used in mobile devices, such as smartphones, to provides features such as camera autofocus and facial recognition.

Applicant has identified many technical challenges and difficulties associated with optical modules such as ToF sensors. For example, such ToF sensors often have an issue with external crosstalk between the transmit (Tx) side and the receive (Rx) side. Crosstalk occurs when light from the Tx side is reflected from a surface other than the subject (e.g., the cover glass or internal structures) to the Rx side. Crosstalk can produce errors in the distance determinations.

Through applied effort, ingenuity, and innovation, Applicant has solved problems related to such optical modules by developing solutions embodied in the present disclosure, which are described in detail below.

### BRIEF SUMMARY

Various embodiments described herein related to apertures for reducing crosstalk in optical modules, optical modules having apertures to reduce crosstalk, and methods for reducing crosstalk in optical modules.

Various embodiments described herein related to apertures for a transmit portion of an optical module and associated optical modules.

In accordance with various embodiments of the present disclosure, an aperture for a transmit portion of an optical module is provided. In some embodiments, the aperture comprises a generally rectangular main body having four sides and defining a hole therethrough. Each side has at least a top surface and an inside surface. At least three of the four sides have an internal angled surface between their respective top and inside surfaces.

In some embodiments, all four sides have an internal angled surface between their respective top and inside surfaces.

In some embodiments, one side has an external angled surface that angles outward from a center of the main body and downward from its respective top surface.

In some embodiments, the side having an external angled surface is not one of the at least three of the four sides having an internal angled surface.

In some embodiments, the top and inside surfaces of the side having an external angled surface are at substantially right angles to each other.

In some embodiments, the external angled surface is angled at between 22 and 32 degrees downward from the respective top surface.

In some embodiments, the internal angled surface of the at least three of the four sides is angled at between 32 to 62 degrees downward from the respective top surface.

In accordance with various embodiments of the present disclosure, an optical module is provided. In some embodiments, the optical module comprises a transmit portion comprising at least one light source and an aperture and a receive portion comprising at least one light sensor. The aperture comprises a generally rectangular main body having four sides and defining a hole therethrough. Each side of the aperture has at least a top surface and an inside surface. At least three of the four sides of the aperture have an internal angled surface between their respective top and inside surfaces. The aperture is positioned such that light emitted from the at least one light source passes through the hole defined in the aperture.

In accordance with various embodiments of the present disclosure, a method of reducing crosstalk between a transmit portion and a receive portion of an optical module is provided. In some embodiments, the method comprises providing an optical module comprising a transmit portion comprising at least one light source and a receive portion comprising at least one light sensor and positioning an aperture such that light emitted from the at least one light source passes through a hole defined in the aperture. The aperture comprises a generally rectangular main body having four sides, each side having at least a top surface and an inside surface. At least three of the four sides have an internal angled surface between their respective top and inside surfaces.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a perspective view of an example optical module, in accordance with some embodiments of the present disclosure;
FIG. 2 is a perspective view of an example optical module, in accordance with some alternative embodiments of the present disclosure;
FIGS. 3 and 4 are perspective views of an aperture removed from the example optical module of FIG. 1, in accordance with some embodiments of the present disclosure;
FIGS. 5 and 6 are perspective views of an aperture removed from the example optical module of FIG. 2, in accordance with some alternative embodiments of the present disclosure;
FIG. 7 is a sectional view of the aperture of FIGS. 5 and 6; and
FIG. 8 is a partial sectional view of the example optical module of FIG. 2, in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

Various embodiments of the present disclosure overcome the above technical challenges and difficulties and provide various technical improvements and advantages based on, for example, but not limited to, providing an aperture for an optical module that reduces the amount of crosstalk between the Tx and Rx sides of the optical module.

Various embodiments of the present disclosure provide an aperture having a generally rectangular main body having four sides and defining a hole therethrough, at least three of its four sides have an internal angled surface between respective top and inside surfaces. In various embodiments, all four sides have an internal angled surface between their respective top and inside surfaces. In various embodiments, one side has an external angled surface that angles outward from a center of the main body and downward from its respective top surface. In various embodiments, the side having the external angled surface does not have an internal angled surface.

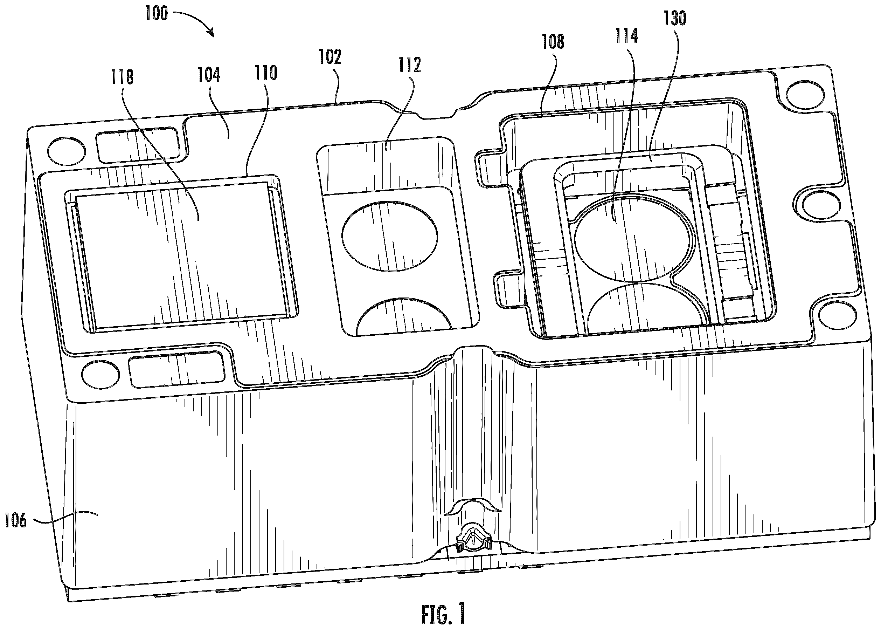

FIG. 1 is a perspective view of an example optical module, in accordance with some embodiments of the present disclosure. Such an optical module may be installed in, for example, a mobile device such as a mobile phone. As seen in FIG. 1, an example optical module 100 comprises a housing 102. In the illustrated embodiment, the housing 102 is generally cuboid, although any suitable shape may be used. In various embodiments, the housing 102 comprises a top surface 104, four side walls 106 (only two of which are visible in FIG. 1), and a bottom surface/substrate (not illustrated) opposite the top surface.

In various embodiments, a variety of components (electrical, electronic, and mechanical) are contained within an internal chamber defined by the top surface 104, side walls 106, and bottom surface/substrate. In various embodiments, these components include Tx components for emitting light and Rx components for receiving reflected light. In various embodiments, the Tx components include one or more light sources, such as one or more VCSELs (not illustrated), and one or more lenses 114 to focus the light emitted by the one or more light sources. In various embodiments, the Rx components include one or more filters 118, one or more lenses (not illustrated), and one or more light sensors (not illustrated). As seen in FIG. 1, the housing 102 defines a Tx cavity 108 through which light from the one or more lights sources exits the housing 102 and an Rx aperture 110 through which reflected light enters the housing 102 to reach the one or more light sensors.

In various embodiments, a light trap cavity is defined in the housing top surface between the Tx opening and the Rx opening to capture some of the crosstalk. In the illustrated embodiment, an opening 112 to a light trap cavity is defined in the top surface 104.

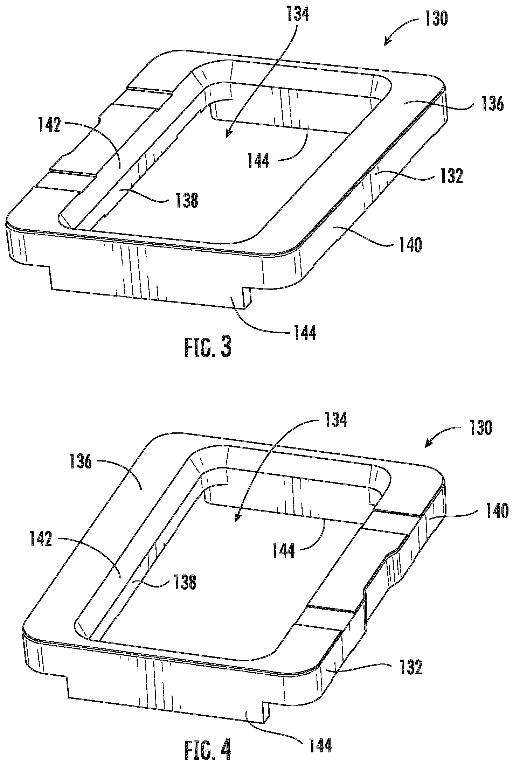

In the illustrated embodiment, an aperture 130 is positioned within the Tx cavity 108 and provides an opening through which light from the one or more lights sources passes before exiting the housing 102. In various embodiments, the shapes and/or angles of various surfaces of the aperture help reduce crosstalk by reducing reflections toward the Rx opening. The aperture 130 is described in detail below relative to FIGS. 3 and 4.

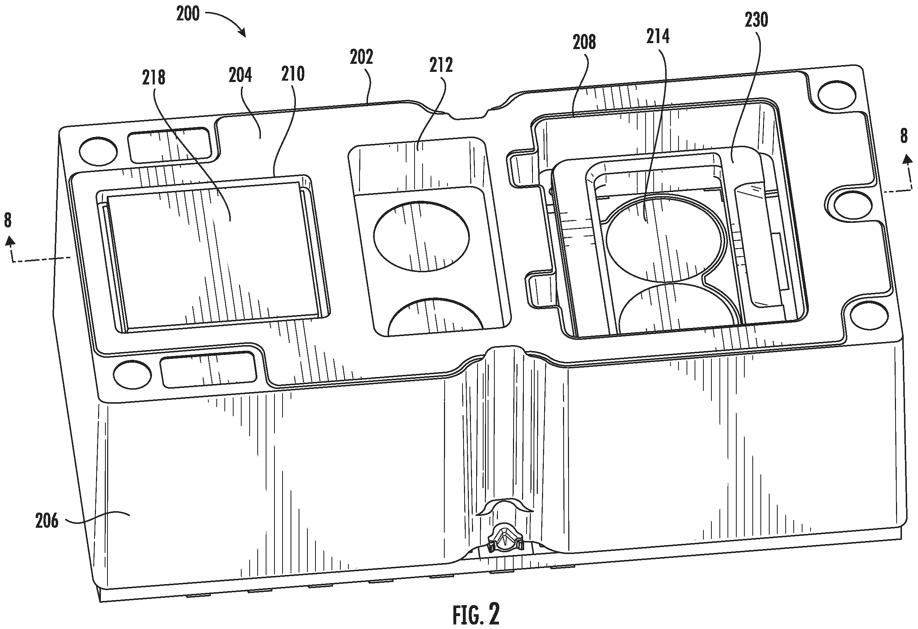

FIG. 2 is a perspective view of an example optical module, in accordance with some alternative embodiments of the present disclosure. As seen in FIG. 2, an example optical module 200 comprises a housing 202. In the illustrated embodiment, the housing 202 is generally cuboid, although any suitable shape may be used. In various embodiments, the housing 202 comprises a top surface 204, four side walls 206 (only two of which are visible in FIG. 2), and a bottom surface/substrate (not illustrated) opposite the front wall.

In various embodiments, a variety of components (electrical, electronic, and mechanical) are contained within an internal chamber defined by the top surface 204, side walls 206, and bottom surface/substrate. In various embodiments, these components include Tx components for emitting light and Rx components for receiving reflected light. In various embodiments, the Tx components include one or more light sources, such as one or more VCSELs (not illustrated), and one or more lenses 214 to focus the light emitted by the one or more light sources. In various embodiments, the Rx components include one or more filters 218, one or more lenses (not illustrated), and one or more light sensors (not illustrated). As seen in FIG. 2, the housing 202 defines a Tx cavity 208 through which light from the one or more lights sources exits the housing 202 and an Rx aperture 210 through which reflected light enters the housing 202 to reach the one or more light sensors.

In various embodiments, a light trap cavity is defined in the housing between the Tx opening and the Rx opening to capture some of the crosstalk. In the illustrated embodiment, an opening 212 to a light trap cavity is defined in the top surface 204.

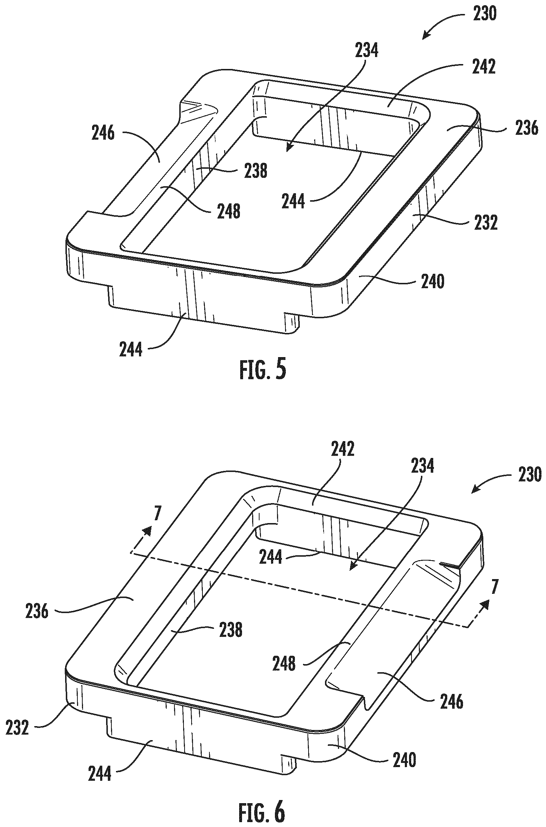

In the illustrated embodiment, an aperture 230 is positioned within the Tx cavity 208 and provides an opening through which light from the one or more lights sources passes before exiting the housing 202. In various embodiments, the shapes and/or angles of various surfaces of the aperture help reduce crosstalk by reducing reflections toward the Rx opening. The aperture 230 is described in detail below relative to FIGS. 5-7.

In various embodiments of the invention, described herein, the aperture of the optical module is constructed separately from the housing and is inserted and secured into the housing during assembly of the optical module. In various alternative embodiments of the invention, the aperture of the optical module is constructed as an integral part of the housing.

FIGS. 3 and 4 are perspective views, from opposing ends, of an aperture removed from the example optical module of FIG. 1, in accordance with some embodiments of the present disclosure. As seen in FIG. 3 and 4, the aperture 130 has a generally rectangular body 132 defining a generally rectangular opening 134 through which light from the one or more lights sources passes before exiting the housing 102. The body 132 has a top surface 136, an inside surface 138, an outside surface 140, and a bottom surface (not illustrated). In some embodiments, the body 132 has elongated legs 144 projecting downward from each of two opposing sides of the body 132.

As seen in FIGS. 3 and 4, each of the four sides of the body 132 have an angled surface 142 between its respective top surface 136 and inside surface 138. In various embodiments, these internal angled surfaces 142 help reduce crosstalk by reducing reflections toward the Rx opening. In the illustrated embodiment of FIGS. 3 and 4, all four sides of the body 132 have an internal angled surface 142. In various alternative embodiments, fewer than all sides of the body may have such an internal angled surface. In some such alternative embodiments, the top surface and the inside surface on such a non-angled side may be at substantially right angles to each other.

In various embodiments, the angled surfaces 142 may be angled at any suitable angle. For example, in some embodiments, the internal angled surface(s) are angled at between 32 to 62 degrees downward from the respective top surface. In various embodiments, all of the internal angled surfaces may have the same angle or there may be two or more different angles of the angled surfaces.

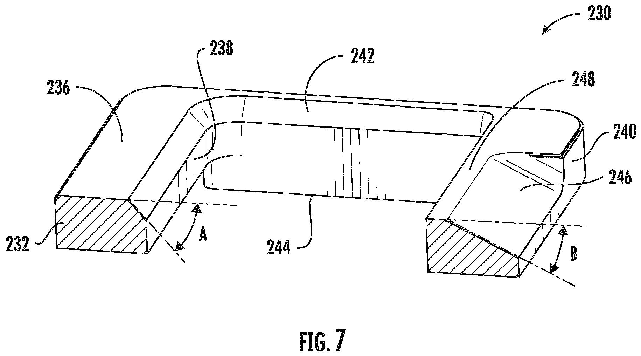

FIGS. 5 and 6 are perspective views, from opposing ends, of an aperture removed from the example optical module of FIG. 2, in accordance with some embodiments of the present disclosure. FIG. 7 is a sectional view of the aperture of FIGS. 5 and 6, along line 7-7 of FIG. 6. As seen in FIG. 5 and 6, the aperture 230 has a generally rectangular body 232 defining a generally rectangular opening 234 through which light from the one or more lights sources passes before exiting the housing 202. The body 232 has a top surface 236, an inside surface 238, an outside surface 240, and a bottom surface (not illustrated). In some embodiments, the body 232 has elongated legs 244 projecting downward from each of two opposing sides of the body 232.

As seen in FIGS. 5 and 6, three of the four sides of the body 232 have an angled surface 242 between its respective top surface 236 and inside surface 238. In various embodiments, these internal angled surfaces 242 help reduce crosstalk by reducing reflections toward the Rx opening. In the illustrated embodiment of FIGS. 5 and 6, three of the four sides of the body 232 have an internal angled surface 242. In various alternative embodiments, all or fewer than all sides of the body may have such an internal angled surface. As seen in FIGS. 5 and 6, the top surface and the inside surface on the non-angled side are at substantially right angles to each other.

In various embodiments, the internal angled surfaces 242 may be angled at any suitable angle. This angle is illustrated as angle A in FIG. 7. For example, in some embodiments, the internal angled surface(s) are angled at between 32 to 62 degrees downward from the respective top surface. In one specific example embodiment, the internal angled surface(s) are angled at about 47 degrees downward from the respective top surface. In various embodiments, all of the internal angled surfaces may have the same angle or there may be two or more different angles of the angled surfaces.

As seen in FIGS. 5 and 6, one side of the body 232 has an external angled surface 246 that angles outward from a center of the body 232 and downward from its respective top surface 236. In various embodiments, this external angled surface 246 help reduce crosstalk by reducing reflections toward the Rx opening. In the illustrated embodiment of FIGS. 5 and 6, only one of the four sides of the body 232 has an external angled surface 246. In the illustrated embodiment, the side that has an external angled surface 246 is the same side that does not have an internal angled surface, however that may vary. In various alternative embodiments, one or more sides of the body may have such an external angled surface.

In various embodiments, the size of the external angled surface 246 may vary. The size of the external angled surface 246 may be considered in terms of how much of the respective top surface remains between the top edge of the external angled surface 246 and the opening 234. In some embodiments, it may be desirable for at least some of the respective top surface to remain between the top edge of the external angled surface 246 and the opening 234. In some embodiments, it may be desirable for the amount of the respective top surface that remains between the top edge of the external angled surface 246 and the opening 234 to be minimized.

In various embodiments, the external angled surface 246 may be angled at any suitable angle. This angle is illustrated as angle B in FIG. 7. For example, in some embodiments, the external angled surface 246 is angled at between 22 and 32 degrees downward from the respective top surface. In one specific example embodiment, the external angled surface 246 is angled at about 27 degrees downward from the respective top surface.

In various embodiments, the angle(s) of the internal angled surface(s) and/or the angle of the external angled surface may vary depending on many factors, including, but not limited to, any one or more of the following: optical properties of the customer level cover glass, separation between the Rx and Tx portions of the optical module, Z position of the aperture, optical functions of the VCSEL & Tx (e.g., divergence), geometry of the housing cap (e.g., light trap, Rx cavity, Tx cavity), surface finish and roughness of the housing cap and the aperture, the air gap from the top surface of the optical module to the cover glass, and the position, geometry, optical properties, etc. of any surrounding components (e.g., an external electromagnetic interference shield).

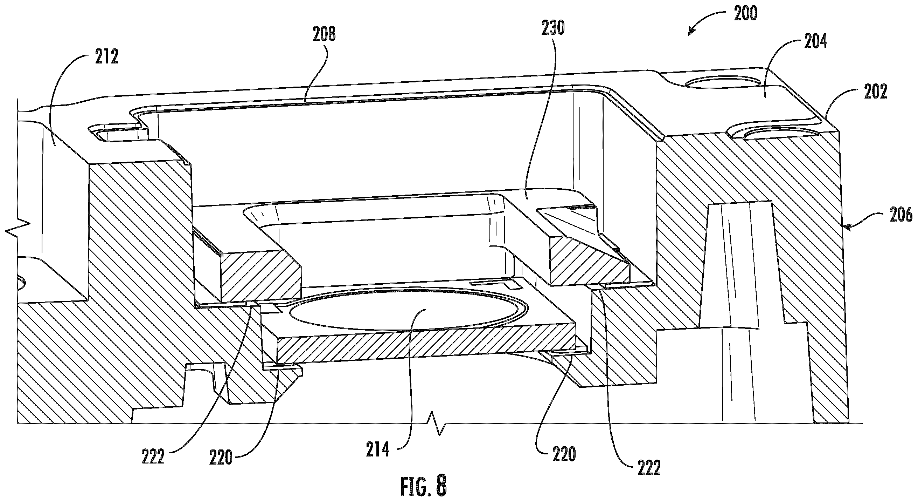

As described above, in various embodiments of the invention, the aperture of the optical module is constructed separately from the housing and is inserted and secured into the housing during assembly of the optical module. FIG. 8 is a partial sectional view of the example optical module of FIG. 2, in accordance with some embodiments of the present disclosure, illustrating an example of how such an aperture may be mounted within the housing of an optical module. FIG. 8 is a sectional view of the optical module 200 of FIG. 2, along line 8-8. As seen in FIG. 8, the lens 214 sits on a first shoulder 220. FIG. 8 illustrates the lens 214 being supported on two opposing sides by the first shoulder 220, however the lens 214 may be supported on all four sides. As seen in FIG. 8, the aperture 230 sits on a second shoulder 222. FIG. 8 illustrates the aperture 230 being supported on two opposing sides by the second shoulder 222, however the aperture 230 may be supported on all four sides.

In some embodiments, the placement/securing of the lens(es) and/or filter(s) into the housing may result in slight variations of position of the lens(es) and/or filter(s). As such, in some embodiments the position of the aperture may be aligned relative to the lens(es) during placement/securing of the aperture. In some embodiments, the aperture is secured in position and to the second shoulder (or any other suitable surface(s)) using any suitable adhesive. In some embodiments, the downwardly extending legs of the aperture are positioned to help prevent the lens substrate and lens(es) from falling out, although there may be no contact between the legs of the aperture and the lens if the lens is properly secured.

As is best seen in FIG. 8, both the internal angled surface(s) and the external angled surface(s) are positioned on the aperture such that the angled surface(s) face the top surface 204 of the housing 202 to provide the desired functionality regardless of whether the aperture is an integral part of the housing or is constructed separately from the housing and inserted and secured into the housing during assembly of the optical module, and regardless of the attachment method or alignment of the aperture.

In various embodiments, reduction in crosstalk provided by embodiments of the disclosure may provide: a reduction in integrated power caused by external crosstalk, a reduction in channel integrated power caused by external crosstalk, a reduction in mean irradiance caused by external crosstalk. In some variations, there may be a slight increase in peak irradiance caused by external crosstalk, despite the overall reduction in crosstalk signal.

### Conclusion

Many modifications and other embodiments of the disclosures set forth herein will come to mind to one skilled in the art to which these disclosures pertain having the benefit of teachings presented in the foregoing descriptions and the associated drawings. Although the figures only show certain components of the apparatus and systems described herein, it is understood that various other components may be used in conjunction with the system. Therefore, it is to be understood that the disclosures are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. The disclosed embodiments relate primarily to fragmented wideband tympanometry techniques for true wireless stereo, however, one skilled in the art may recognize that such principles may be applied to any audio device. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the disclosure(s) set out in any claims that may issue from this disclosure.

While this detailed description has set forth some embodiments of the present disclosure, the appended claims cover other embodiments of the present disclosure which differ from the described embodiments according to various modifications and improvements. For example, the appended claims can cover any form of optical module having a Tx side and an Rx side in which reduction of crosstalk is desirable, such as time of flight sensors, LiDAR sensors or any laser ranging application with a transmit (Tx) and receive (Rx) side.

Within the appended claims, unless the specific term "means for" or "step for" is used within a given claim, it is not intended that the claim be interpreted under 35 U.S.C. 112, paragraph 6.

## Claims

1. An aperture for a transmit portion of an optical module, the aperture comprising:
a generally rectangular main body having four sides and defining a hole therethrough, each side having at least a top surface and an inside surface, wherein at least three of the four sides have an internal angled surface between their respective top and inside surfaces.

2. The aperture of claim 1, wherein all four sides have an internal angled surface between their respective top and inside surfaces.

3. The aperture of claim 1, wherein one side has an external angled surface that angles outward from a center of the main body and downward from its respective top surface.

4. The aperture of claim 3, wherein the side having an external angled surface is not one of the at least three of the four sides having an internal angled surface.

5. The aperture of claim 3, wherein the top and inside surfaces of the side having an external angled surface are at substantially right angles to each other.

6. The aperture of claim 3, wherein the external angled surface is angled at between 22 and 32 degrees downward from the respective top surface.

7. The aperture of claim 1, wherein the internal angled surface of the at least three of the four sides is angled at between 32 to 62 degrees downward from the respective top surface.

8. An optical module comprising:
a transmit portion comprising at least one light source and an aperture; and
a receive portion comprising at least one light sensor;
wherein the aperture comprises a generally rectangular main body having four sides and defining a hole therethrough, each side having at least a top surface and an inside surface, wherein at least three of the four sides have an internal angled surface between their respective top and inside surfaces; and
wherein the aperture is positioned such that light emitted from the at least one light source passes through the hole defined in the aperture.

9. The optical module of claim 8, wherein all four sides of the aperture have an internal angled surface between their respective top and inside surfaces.

10. The optical module of claim 8, wherein one side of the aperture has an external angled surface that angles outward from a center of the main body and downward from its respective top surface.

11. The optical module of claim 10, wherein the side of the aperture having an external angled surface is not one of the at least three of the four sides having an internal angled surface.

12. The optical module of claim 10, wherein the top and inside surfaces of the side having an external angled surface are at substantially right angles to each other.

13. The optical module of claim 10, wherein the external angled surface of the aperture is angled at between 22 and 32 degrees downward from the respective top surface.

14. The optical module of claim 8, wherein the internal angled surface of the at least three of the four sides of the aperture is angled at between 32 to 62 degrees downward from the respective top surface.

15. A method of reducing crosstalk between a transmit portion and a receive portion of an optical module, the method comprising:
providing an optical module comprising a transmit portion comprising at least one light source and a receive portion comprising at least one light sensor; and
positioning an aperture such that light emitted from the at least one light source passes through a hole defined in the aperture;
wherein the aperture comprises a generally rectangular main body having four sides, each side having at least a top surface and an inside surface; and
wherein at least three of the four sides have an internal angled surface between their respective top and inside surfaces.

16. The method of claim 15, wherein the aperture is unitary with a housing of the optical module.

17. The method of claim 15, wherein the aperture is distinct from a housing of the optical module.

18. The method of claim 15, wherein all four sides of the aperture have an internal angled surface between their respective top and inside surfaces.

19. The method of claim 15, wherein one side of the aperture has an external angled surface that angles outward from a center of the main body and downward from its respective top surface.

20. The method of claim 19, wherein the side of the aperture having an external angled surface is not one of the at least three of the four sides having an internal angled surface.
